# NEUE EUROPÄISCHE PATENTSCHRIFT

(11) **EP 2 520 147 B2**
(45) Veröffentlichungstag und Bekanntmachung des Hinweises auf die Entscheidung über den Einspruch: **21.02.2018**
(45) Hinweis auf die Patenterteilung: 19.11.2014
(21) Anmeldenummer: 12002791.7
(22) Anmeldetag: 20.04.2012
(51) Int. Cl.: A01B 73/04, A01D 78/10

(54) **Heuwerbungsmaschine**
Hay maker
Faneuse

(30) Priorität: 04.05.2011 DE 102011100383
(43) Veröffentlichungstag der Anmeldung: 07.11.2012
(73) Patentinhaber: Maschinenfabrik Bernard Krone GmbH, 48480 Spelle (DE)
(72) Erfinder: Horstmann, Josef, Dr.-Ing., 49479 Ibbenbüren (DE); Leifeling, Karl, 48477 Hörstel (DE); Afting, Andreas, 48488 Emsbüren (DE)
(74) Vertreter: Busse & Busse

(56) Entgegenhaltungen:
- EP-A1- 1 051 901
- DE-A1- 1 557 735
- DE-A1- 3 603 014
- DE-A1- 4 128 501
- DE-T2- 69 117 953
- DE-U1- 20 011 429
- US-A- 3 449 897
- US-A- 4 271 913
- US-A- 4 723 404
- Lely Lotus 1325 - Parts list B-SV.021.0399
- Lely Lotus 1325 - Operator's manual T-H003.0802VT

## Beschreibung

Die vorliegende Erfindung betrifft eine Heuwerbungsmaschine, insbesondere zum Zetten und Wenden von auf dem Boden liegenden Erntegut mit den Merkmalen des Oberbegriffs des Anspruchs 1.

Derartige Heuwerbungsmaschinen sind aus der Praxis in zahlreichen Ausführungsformen bekannt. Durch die Entwicklung extrem großer und leistungsfähiger Maschinen ist fast allen Maschinen dieser Gattung eine Problemstellung gemein. Die über Stützräder abgestützten Arbeitskreisel der Heuwerbungsmaschinen sollen möglichst genau der Bodenkontur des von ihnen zu bearbeitenden Bereiches folgen, um ein gutes Arbeitsergebnis zu erzielen. Dazu ist es notwendig, dass die die Arbeitskreisel tragende Seitenteile des Maschinenbalkens der Heuwerbungsmaschine die Arbeitskreisel einerseits stabil in deren Arbeitslage führt und andererseits die zur Bodenkopierung der Arbeitskreisel notwendigen Bewegungen möglichst ungehindert von unerwünschten Widerständen zulässt. Dieses wird unter anderem dadurch erreicht, dass die jeweiligen Einzeltragbalken der Seitenteile durch in der Betriebsstellung im Wesentlichen horizontale Schwenkachsen aufweisende Gelenkverbindungen verbunden sind. Mit zunehmender Arbeitsbreite der Maschinen erhöht sich die Anzahl der Arbeitskreisel und damit auch die Anzahl der Gelenkverbindungen. Da die Gelenkverbindungen Fertigungstoleranzen aufweisen, ergibt sich ein sich summierendes Spiel in den Verbindungen, welches mit wirtschaftlich vertretbarem Aufwand auch nicht vermeidbar ist. Zunehmende Einsatzdauer der Maschine führt zu immer größerem Spiel und immer schneller fortschreitendem Verschleiß. Dieses wirkt sich insbesondere von Arbeitskreisel zu Arbeitskreisel zunehmend nach außen hin negativ auf die Grundeinstellungen aus. Dadurch kommt es zu einer Verdrehung bzw. einer Versetzung der Einzeltragbalken zueinander. Des Weiteren können elastische Verformungen der Bauteile durch die bei zunehmender Arbeitsbreite stark ansteigenden Belastungen und Widerstände während des Betriebes entstehen. Dieses wiederum führt dazu, dass die Zinken der Arbeitskreisel im Betrieb unterschiedliche Abstände zu der Bodenoberfläche aufweisen und somit durch die schlechte Bodenanpassung kein optimales Arbeitsergebnis erzielt werden kann.

Aus der DE 203 12 938 U1 ist beispielsweise eine Heuwerbungsmaschine bekannt, bei der mithilfe einer dritten, in der Betriebsstellung quer zur Fahrtrichtung ausgerichteten, Gelenkachse die Seitenteile des Maschinenbalkens unabhängig voneinander verstellt werden können und in Verbindung mit einem an jedem Seitenteil vor den Kreiseln angeordneten Tastrad eine verbesserte Bodenanpassung erreicht werden soll. Nachteilig hierbei ist allerdings, dass die Seitenteile lediglich komplett beeinflusst werden und keine Anpassung der einzelnen Arbeitskreisel möglich ist. Dazu kommt, dass diese Ausführung aufgrund der zusätzlichen Bauteile, das Gewicht der Maschine erhöht und erhebliche Zusatzkosten verursacht.

Die EP 1 051 901 A1 zeigt und beschreibt eine Heuwerbungsmaschine, bei der an einem in der Arbeitsstellung quer zur Fahrt- und Arbeitsrichtung ausgerichteten Maschinenbalken eine Mehrzahl von Kreiselrechen oder dgl. Arbeitswerkzeuge zum Zetten und Wenden von halmförmigen Erntegut angebracht sind. Damit solche, eine große Arbeitsbreite aufweisende Heuwerbungsmaschinen auch auf der Straße transportiert werden können, ist der Maschinenbalken in eine Mehrzahl von Seitenträgern oder Einzeltragbalken unterteilt, wobei jeder Seitenträger oder Einzeltragbalken mit seinem benachbarten Seitenträger oder Einzeltragbalken bzw. mit einem zentralen Maschinenbalkenteil über eine Gelenkverbindung miteinander verbunden sind. In Bezug zum zentralen Maschinenbalkenteil können die die Arbeitswerkzeuge tragenden Seitenträger oder Einzeltragbalken dann aufgrund der in Fahrt- und Arbeitsrichtung weisenden Schwenkachsen der Gelenkverbindungen aus einer, eine große Arbeitsbreite abdeckenden Arbeitsstellung in eine zusammengefaltete Transportstellung und zurück überführt werden. Weitere und um andere Schwenkachsen durchführbare Verstelltätigkeiten der zwischen den Seitenträgern oder Einzeltragbalken befindlichen Gelenkverbindungen gehen aus der EP 1 051 901 A1 nicht hervor.

Der vorliegenden Erfindung liegt daher die Aufgabe zugrunde, eine Heuwerbungsmaschine der genannten Art zu schaffen, welche mit minimalem Material und damit auch mit geringem Kostenaufwand ein verbessertes Arbeitsergebnis ermöglicht.

Erfindungsgemäß wird diese Aufgabe durch die kennzeichnenden Merkmale des Anspruchs 1 gelöst. Vorteilhafte Ausgestaltungen sind Gegenstand der weiteren Ansprüche. Die Heuwerbungsmaschine, insbesondere zum Zetten und Wenden mit großer Arbeitsbreite umfasst an einem in Betriebsstellung quer zur Fahrtrichtung ausgerichteten Maschinenbalken angeordnete und über Stützräder auf der Bodenoberfläche abgestützte Arbeitskreisel, wobei der in eine Transportstellung schwenkbare Seitenteile aufweisende Maschinenbalken durch Gelenkverbindungen in Einzeltragbalken unterteilt ist und die Seitenteile des Maschinenbalkens Verstelleinrichtungen zur Ausrichtung der Einzeltragbalken zueinander aufweisen und wobei die durch die Gelenkverbindungen verbundenen Einzeltragbalken durch die Verstelleinrichtungen um eine in Längserstreckung der Einzeltragbalken ausgerichtete Achse rotierend verstellbar sind.

Die Heuwerbungsmaschine nach der Erfindung umfasst einen quer zur Fahrtrichtung ausgerichteten Maschinenbalken, welcher zwei mit über Stützräder auf dem Boden abgestützten Arbeitskreiseln versehene Seitenteile aufweist. Die Seitenteile sind in Einzeltragbalken unterteilt, welche zum Verschwenken der Seitenteile in eine Transportstellung und zur Beweglichkeit der Seitenteile bei Bodenunebenheiten durch Gelenkverbindungen verbunden sind und vorzugsweise jeweils einen Arbeitskreisel aufnehmen. Diese Gelenkverbindungen sind vorzugsweise als Gelenkbolzenverbindung mit zwei Gelenkbolzen ausgeführt. Dadurch, dass die Gelenkbolzen der Gelenkverbindungen zugleich als Verstelleinrichtungen ausgebildet sind, können durch diese Verstelleinrichtungen die Einzeltragbalken unterschiedlich zueinander ausgerichtet werden. In einer erfindungsgemäßen Ausführungsform ist es vorzugsweise vorgesehen, die vorhandenen zentrischen Gelenkbolzen der Gelenkverbindungen durch Gelenkbolzen mit einem exzentrischen Lagerbereich zu ersetzen. Dies bedeutet, dass die Mittelachse der Gelenkbolzenlagerstelle nicht der Mittelachse des Gelenkbolzens entspricht. Durch Drehen dieser Gelenkbolzen im unbelasteten Zustand können die Einzeltragbalken folglich zueinander verstellt werden. Dieses kann zum einen eine rotierende Verstellung um eine in Längserstreckung der Einzeltragbalken verlaufende Achse und zum anderen eine Winkelverstellung in der Längserstreckung der Einzeltragbalken zueinander sein, so dass die durch das Spiel in der Lagerstelle und durch die Belastungen und Widerstände im Betrieb verursachten unterschiedlichen Abstände der Arbeitskreisel zu der Bodenoberfläche ausgeglichen werden. Vorzugsweise ist es bei der Ausführung der mit zwei Gelenkbolzen versehenen Gelenkverbindungen vorgesehen, beide Gelenkbolzen als exzentrische Gelenkbolzen auszubilden. Ebenso würde es ausreichen, lediglich einen der beiden Gelenkbolzen der Gelenkverbindungen exzentrisch auszubilden, was dementsprechend kostengünstiger wäre. Um jedoch eine koaxiale Ausrichtung der jeweiligen Einzeltragbalken beizubehalten und einen größeren Verstellbereich zu ermöglichen, ist die erste Ausführung mit zwei Gelenkbolzen vorteilhafter.

Ferner könnten in einer weiteren Ausführungsform auch durchgängige Gelenkbolzen verwendet werden, wobei diese allerdings unterhalb der Balkenmitte angeordnet werden müssten, da in den Einzeltragbalken der Seitenteile Antriebswellen für den Antrieb der Arbeitskreisel verlaufen, welche im Bereich der Gelenkverbindungen gekuppelt ist. In einer aufwändigeren Ausführungsform ist es ebenso denkbar, dass nicht die Gelenkbolzen der Gelenkverbindungen exzentrisch ausgebildet sind, sondern die Lagerbuchsen eine exzentrische Bohrung aufweisen und durch eine Verdrehung der Lagerbuchse eine Justierung der Einzeltragbalken erfolgen kann.

Weiterhin wird vorgeschlagen, den Verstelleinrichtungen Sicherungselemente zuzuordnen, welche zum einen ein unbeabsichtigtes Verstellen der vorgenommenen Einstellungen an den Gelenkbolzen verhindern und zum anderen als Anzeigemittel für die Verstellung der Gelenkbolzen dienen. Dazu könnten beispielsweise ein Sicherungselement in einer Ausführungsform als eine Anschraublasche ausgebildet sein, welche Bohrungen aufweist, in denen ein am Gelenkbolzen angeordneter Zapfen eingesetzt werden kann, so dass zusätzlich ein Verstellen des Gelenkbolzens in verschiedenen vorgegebenen Positionen möglich ist.

Als besonders vorteilhaft an den zuvor beschriebenen erfindungsgemäßen Ausführungsformen ist anzusehen, dass sie aufgrund der ohnehin vorhandenen Gelenkbolzen keine zusätzlichen erfordern und darüber hinaus leicht nachrüstbar sind. Es müssen lediglich vorhandene zentrische Gelenkbolzen gegen exzentrische Gelenkbolzen ausgetauscht werden. Des Weiteren ist es nicht notwendig, jede Gelenkverbindung mit einem exzentrischen Gelenkbolzen auszustatten, da sich das Spiel und die Belastungen im Betrieb in erster Linie an den außen liegenden Gelenkverbindungen auswirken. Es kann ausreichend sein, lediglich ab der Mitte der Seitenteile die Verstelleinrichtungen in Form von exzentrischen Gelenkbolzen einzusetzen. Dadurch ist diese Ausführung besonders kostengünstig.

In einer weiteren erfindungsgemäßen Ausführungsform kann die Justierung der Einzeltragbalken ebenso durch Verstelleinrichtungen in Flanschverbindungen erfolgen. Dazu muss zumindest ein Einzeltragbalken eine aus zwei miteinander befestigten Flanschplatten bestehende Flanschverbindung aufweisen, wobei die Flanschplatten vorzugsweise bogenförmige Langlöcher enthalten. In diesen Langlöchern wird die Verschraubung der Flanschplatten geführt, so dass die Einzeltragbalken in rotierender Weise um eine in Längserstreckung der Einzeltragbalken gerichtete Achse zueinander justiert werden können. Bei dieser Ausführungsform kann lediglich eine rotierende Verstellung um eine in Längserstreckung der Einzeltragbalken gerichtete Achse vorgenommen werden und keine Winkelverstellung in der Längserstreckung der Einzeltragbalken, wie bei der Ausführungsform mit exzentrischen Gelenkbolzen. Dazu kommt, dass die Heuwerbungsmaschinen im Normalfall innerhalb der Seitenteile keine Flanschstellen aufweisen. Somit ist es notwendig, zusätzliche Flanschstellen an den Seitenteilen zu schaffen, um eine verbesserte Bodenanpassung aller Arbeitskreisel zu gewährleisten. Zwar ist diese Art der Ausführung nicht nachrüstbar, dennoch stellt sie ebenfalls eine einfache und kostengünstige Lösung zur Optimierung der Bodenanpassung im Betrieb dar.

Weitere Vorteile und Einzelheiten der Erfindung ergeben sich aus einem in den Zeichnungen dargestellten Ausführungsbeispiel, das im Folgenden beschrieben wird.

In der Zeichnung zeigt:
- **Fig. 1:**: eine perspektivische Gesamtansicht einer erfindungsgemäßen Heuwerbungsmaschine in Arbeitsstellung mit einem vorgeordneten Schlepper;
- **Fig. 2:**: einen teils schematisch und perspektivisch dargestellten vergrößerten Ausschnitt X einer Gelenkverbindung aus der Gesamtansicht einer erfindungsgemäßen Heuwerbungswerbungsmaschine aus Fig. 1;
- **Fig. 3:**: eine Schnittdarstellung der in der Fig. 2 gezeigten Gelenkverbindung der erfindungsgemäßen Heuwerbungsmaschine gemäß Schnitt III - III

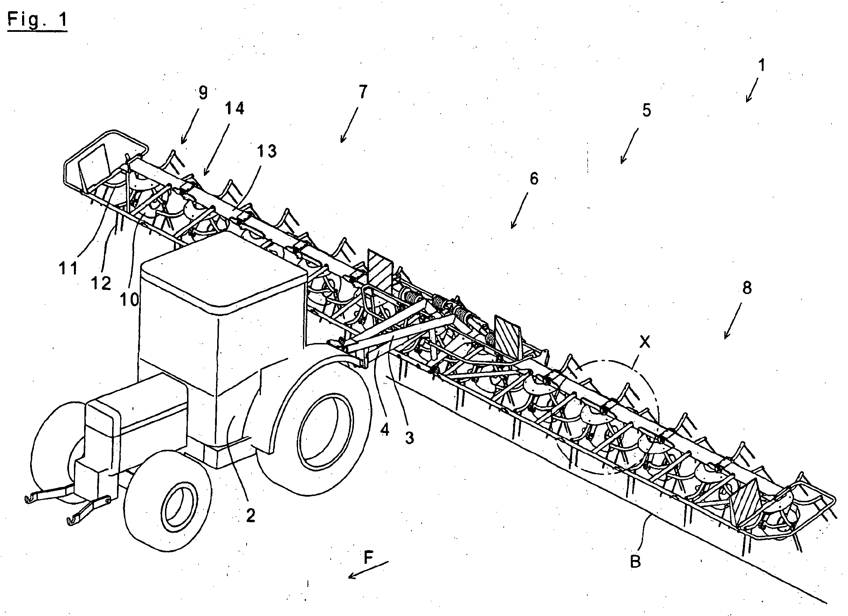

Fig. 1 zeigt einen gezogenen Kreiselzettwender 1 zum Zetten und Wenden von landwirtschaftlichem Erntegut in Arbeitsstellung als Ausführungsbeispiel einer erfindungsgemäßen Heuwerbungsmaschine. Bei der gezeigten Maschine allgemein bekannter Bauart sind in den Figuren 1-3 nicht erfindungsrelevante Bauteile zwecks besserer Übersicht teils nicht dargestellt und gleiche Bauteile der Maschine in den jeweiligen Figuren größtenteils lediglich einmal gekennzeichnet. Dem Kreiselzettwender 1 in der Fig. 1 ist ein als Zug- und Antriebsmaschine dienender Schlepper 2 vorgeordnet, wobei der Kreiselzettwender 1 und der Schlepper 2 über eine Deichseleinrichtung 3 und einer Gelenkwelle 4 miteinander gekoppelt sind. Der Kreiselzettwender 1 umfasst einen Maschinenbalken 5, welcher sich in der Betriebsstellung von einem mittig liegenden Verteilergetriebe 6 beidseitig quer zu der Fahrtrichtung F nach außen hin erstreckt. Der Maschinenbalken 5 weist zwei sich ebenfalls nach außen hin erstreckende Seitenteile 7,8 auf. Am Maschinenbalken 5 und den Seitenteilen 7,8 sind über mit dem Verteilergetriebe 6 verbundene und im Maschinenbalken 5 und den Seitenteilen 7,8 gelegene Antriebswellen angetriebene Arbeitskreisel 9 drehbar gelagert. Die Arbeitskreisel 9 werden von einem Stützrad 10 abgestützt und weisen jeweils zum Zetten und Wenden des Ernteguts mehrere Zinkenarme 11 mit Zinken 12 auf. Zur Überführung des Kreiselzettwenders 1 von der quer zu der Fahrtrichtung F ausgerichteten Betriebsstellung in die parallel zu der Fahrtrichtung F ausgerichteten Transportstellung und zur dynamischen Anpassung der Arbeitskreisel 9 an Bodenunebenheiten sind die Seitenteile 7,8 in Einzeltragbalken 13 unterteilt, welche durch horizontale, fahrtrichtungsparallele Schwenkachsen aufweisende Gelenkverbindungen 14 miteinander verbunden sind. Jedem Einzeltragbalken 13 ist dabei ein Arbeitskreisel 9 zugeordnet. Wie aus Fig. 1 weiterhin hervorgeht, weisen die vorderen Zinken 12 der Arbeitskreisel 9 in der Betriebsstellung jeweils den gleichen Abstand zu der Bodenoberfläche auf, welche in der Fig. 1 mit einer durchgängigen Linie dargestellt und mit dem Bezugszeichen B gekennzeichnet ist. Diese Stellung der Arbeitskreisel 9 wird als Grundeinstellung des Kreiselzettwenders 1 angesehen. Wird diese Grundeinstellung durch beispielsweise erhöhten Verschleiß aufgrund langer Nutzungsdauer des Kreiselzettwenders 1 negativ beeinflusst, ist es erforderlich, diese Einstellungen zu korrigieren. Dieses wird erfindungsgemäß mithilfe der verbesserten, in den folgenden Figuren näher veranschaulichten Gelenkverbindungen 14 der Einzeltragbalken 13 erreicht.

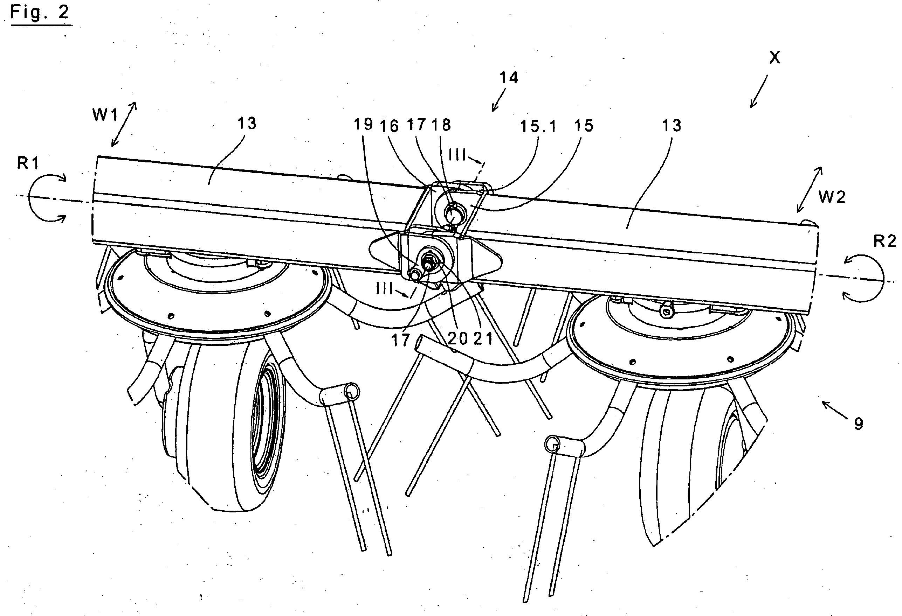

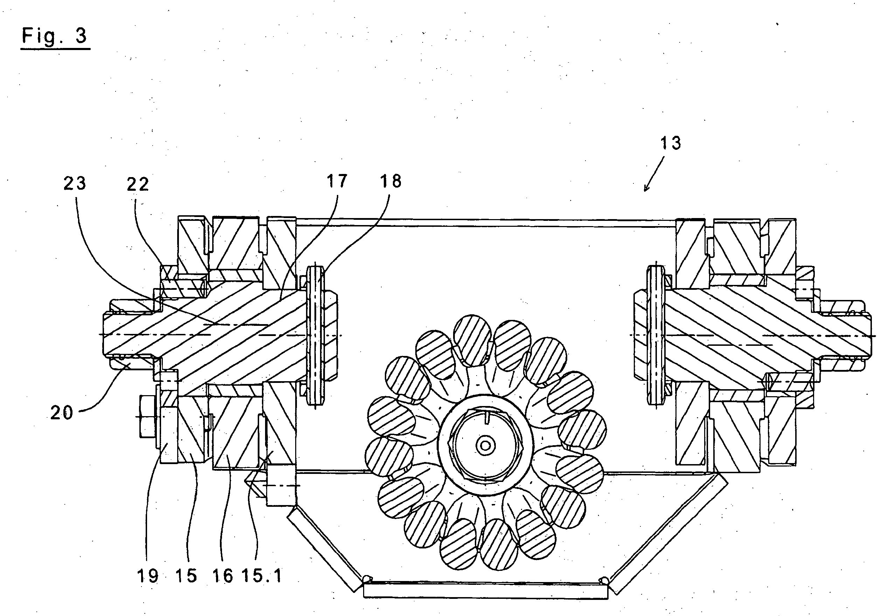

Die Fig. 2 stellt eine vergrößerte, perspektivisch dargestellte Ansicht des Detailbereichs X aus Fig. 1 dar. Die Fig. 2 zeigt zwei nebeneinander angeordnete Einzeltragbalken 13, welche jeweils einen Arbeitskreisel 9 tragen. Die Einzeltragbalken 13 sind über eine Gelenkverbindung 14 verbunden. Dazu weisen die Einzeltragbalken 13 jeweils angeschweißte doppelte Laschen 15, 15.1 und einzelne Laschen 16 für die Aufnahme von jeweils einen Gelenkbolzen 17 auf. Die Lagerstelle des jeweiligen Gelenkbolzens 17 für die einzelne Lasche 16 der Einzeltragbalken 13 ist exzentrisch ausgebildet. Weiterhin ist der Fig. 2 und insbesondere auch der weiteren Fig. 3 zu entnehmen, dass die beiden Gelenkbolzen 17 jeweils beidseitig Sicherungselemente aufweisen. Eine Seite der jeweiligen Gelenkbolzen 17 ist mit einem Spannstift 18 und die andere Seite mit einer an den Einzeltragbalken 13 befestigte Anschraublasche 19 und einer Sicherungsmutter 20 gesichert. Die zur Sicherung des jeweiligen Gelenkbolzens 17 angebrachte Anschraublasche 19 weist mehrere Bohrungen 21 auf. Diese Bohrungen 21 dienen der Verstellung zumindest eines Gelenkbolzens 17 in verschiedene Positionen. Dazu wird in jeweils einer Bohrung 21 ein am Gelenkbolzen 17 angeordneter in der Fig. 3 dargestellter Zapfen 22 eingesetzt. Ebenso kann anhand der Bohrungen 21 der jeweiligen Anschraublasche 19 direkt die voreingestellte Position des Gelenkbolzens 17 abgelesen werden.

Kommt es nun u.a. aufgrund des steigenden Verschleißes der Gelenkverbindungen 14 zu einer Verdrehung bzw. Versetzung der Einzeltragbalken 13 zueinander, können die Einzeltragbalken 13 derart zueinander verstellt werden, dass die vorderen Zinken 12 der Arbeitskreisel 9 wieder jeweils zumindest annähernd den gleichen Abstand zu der Bodenoberfläche B aufweisen. Die exzentrische Ausbildung der Gelenkbolzen 17 ist insbesondere in der Fig. 3 an den versetzten Mittelachsen 23 der jeweiligen Gelenkbolzen 17 im Lagerbereich der einzelnen Laschen 16 der Einzeltragbalken 13 erkennbar. Die Verstellung der Einzeltragbalken 13 erfolgt durch eine Drehung zumindest eines Gelenkbolzens 17, wobei der Zapfen 22 eines Gelenkbolzens 17 in eine gewünschte Bohrung 21 der Anschraublasche 19 gesetzt wird. Dadurch können die jeweiligen Einzeltragbalken 13 in den in der Fig. 2 dargestellte Richtungen R1 und/oder R2 um eine in Längserstreckung der Einzeltragbalken 13 gerichtete Achse rotierend und/oder in den Richtungen W1 und/oder W2 in ihrer Längserstreckung im Winkel zueinander verstellt werden, so dass die Abstände der vorderen Zinken 12 der Arbeitskreisel 9 zu der Bodenoberfläche B individuell angepasst werden können.

Die erfindungsgemäße Ausführungsform einer Heuwerbungsmaschine stellt eine besonders kostengünstige und mit geringem Aufwand realisierbare Lösung zur Optimierung der Bodenanpassung der vorderen Zinken 12 der Arbeitskreisel 9 dar. Somit wird eine Heuwerbungsmaschine bereitgestellt, welche mithilfe zusätzlicher Einstellmöglichkeiten der Arbeitskreisel 9 eine enorme Verbesserung des Arbeitsergebnisses darstellt. Wenn auch an diesem Ausführungsbeispiel veranschaulicht, sind weitere Ausführungsformen ebenfalls denkbar. Beispielsweise ist es möglich, an jeweils einem Seitenteil 7,8 oder auch an zumindest einem Einzeltragbalken 13 zumindest eine Flanschverbindung anzubringen, wobei dessen Flanschplatten bogenförmige Langlöcher aufweisen, in denen die Verschraubung der Flanschplatten geführt wird, so dass die Einzeltragbalkenteile um eine in Längserstreckung der Einzeltragbalken 13 gerichtete Achse verstellt werden können.

## Patentansprüche

1. Heuwerbungsmaschine, insbesondere zum Zetten und Wenden mit großer Arbeitsbreite mit an einem in Betriebsstellung quer zur Fahrtrichtung (F) ausgerichteten Maschinenbalken (5) angeordneten und über Stützräder (10) auf der Bodenoberfläche (B) abgestützten Arbeitskreiseln (9), wobei der Maschinenbalken (5) zwei in eine Transportstellung schwenkbare Seitenteile (7, 8) aufweist, die durch Gelenkverbindungen (14) in Einzeltragbalken (13) unterteilt sind, und wobei die Seitenteile (7, 8) Verstelleinrichtungen aufweisen, **dadurch gekennzeichnet, dass** die Verstelleinrichtungen der Seitenteile (7,8) zur Ausrichtung von Einzeftragbalken (13) zueinander desselben Seitenteils (1,8) vorgesehen sind, dassdiedurch die Gelenkverbindungen (14) verbundenen Einzeltragbalken (13) durch die Verstelleinrichtungen um eine in Längserstreckung der Einzeltragbalken (13) ausgerichtete Achse rotierend verstellbarsind, derart, dass die vorderen Zinken (12) in der Betriebsstellung jeweils zumindest annähernd den gleichen Abstand zu der Bodenoberfläche (B) aufweisen.

2. Heuwerbungsmaschine nach Anspruch 1, **dadurch gekennzeichnet, dass** die die Einzeltragbalken (13) verbindenden Gelenkverbindungen (14) insbesondere als Gelenkbolzenverbindungen mit zumindest einem Gelenkbolzen (17) ausgeführt sind, wobei die Gelenkbolzen (17) zumindest eine exzentrische Lagerstelle aufweisen.

3. Heuwerbungsmaschine nach zumindest einem der vorhergehenden Ansprüche, **dadurch gekennzeichnet, dass** die durch die Gelenkverbindungen (14) verbundenen Einzeltragbalken (13) durch die Verstelleinrichtungen in ihrer Längserstreckung zueinander winkelverstellbar sind.

4. Heuwerbungsmaschine nach zumindest einem der vorhergehenden Ansprüche, **dadurch gekennzeichnet, dass** die Verstelleinrichtungen Sicherungselemente aufweisen, welche die vorgenommenen Einstellungen an den Verstelleinrichtungen gegen ein unbeabsichtigtes Verstellen sichern.

5. Heuwerbungsmaschine nach Anspruch 1, **dadurch gekennzeichnet, dass** jedes Seitenteil (7, 8) zumindest eine Flanschverbindung aufweist.

6. Heuwerbungsmaschine nach Anspruch 1 oder 5 **dadurch gekennzeichnet, dass** zumindest ein Einzeltragbalken (13) eine Flanschverbindung aufweist, wobei die Flanschverbindung eine Verdrehung der durch die Flanschverbindung verbundenen Einzeltragbalkenteile um eine in Längserstreckung der Einzeltragbalkenteile ausgerichtete Achse zulassen.

## Claims

1. Hay making machine, in particular for tedding and turning, having a large working width comprising working gyroscopes (9) arranged on a machine beam (5) oriented transversely to the direction of travel (F) when in the operating position and supported on the surface (B) of the ground by supporting wheels (10), the machine beam (5) comprising two side pieces (7, 8) which can pivot into a transport position and are divided into individual carrier beams (13) by articulated joints (14), and the side pieces (7, 8) comprising adjusters, **characterised in that** the adjusters of the side pieces (7, 8) orient individual carrier beams (13) of the same side piece (7, 8) relative to one another, **in that** the individual carrier beams (13) connected by the articulated joints (14) can be rotationally adjusted by the adjusters about an axis oriented in the longitudinal extension of the individual carrier beams (13), such that the front tines (12), in the operating position, are each at at least roughly the same distance from the surface (B) of the ground.

2. Hay making machine according to claim 1, **characterised in that** the articulated joints (14) connecting the individual carrier beams (13) are designed in particular as hinge pin joints having at least one hinge pin (17), the hinge pins (17) having at least one eccentric bearing.

3. Hay making machine according to at least one of the preceding claims, **characterised in that** the individual carrier beams (13) connected by the articulated joints (14) can be angularly adjusted relative to one another by the adjusters in the longitudinal extension of said beams.

4. Hay making machine according to at least one of the preceding claims, **characterised in that** the adjusters comprise locking elements which secure the settings made against an inadvertent readjustment.

5. Hay making machine according to claim 1, **characterised in that** each of the side pieces (7, 8) have at least one flange joint.

6. Hay making machine according to either claim 1 or claim 5, **characterised in that** at least one individual carrier beam (13) comprises a flange joint, the flange joint allowing the individual carrier beam parts connected by the flange joint to turn about an axis oriented in the longitudinal extension of the individual carrier beam parts.

## Revendications

1. Machine de fenaison, destinée en particulier au fanage et au retournement avec une grande largeur de travail, comprenant des éléments de travail rotatifs (9) disposés sur une poutre de machine (5) orientée transversalement au sens de déplacement (F) dans la position de fonctionnement et placée en appui sur la surface (B) du sol par le biais de roues de support (10), la poutre de machine (5) comportant deux parties latérales (7, 8) pouvant pivoter jusque dans une position de transport, lesquelles parties latérales sont divisées en poutres de support individuelles (13) par des liaisons articulées (14), et les parties latérales (7, 8) comportant des moyens de réglage, **caractérisée en ce que** les moyens de réglage des parties latérales (7, 8) sont destinées à orienter les poutres de support individuelles (13) de la même partie latérale (7, 8) les unes par rapport aux autres, **en ce que** les poutres de support individuelles (13), reliées par les liaisons articulées (14), peuvent être réglées par les moyens de réglage de manière rotative sur un axe orienté suivant l'extension longitudinale des poutres de support individuelles (13) de sorte que les dents avant (12) se trouvent chacune, dans la position de fonctionnement, au moins à peu près à la même distance de la surface (B) du sol.

2. Machine de fenaison selon la revendication 1, **caractérisée en ce que** les liaisons articulées (14), reliant les poutres de support individuelles (13), sont réalisées en particulier sous la forme de liaisons à axes d'articulation comportant au moins un axe d'articulation (17), les axes d'articulation (17) comportant au moins un palier excentrique.

3. Machine de fenaison selon au moins l'une des revendications précédentes, **caractérisée en ce que** les poutres de support individuelles (13), reliées par les liaisons articulées (14), peuvent être réglées angulairement les unes par rapport aux autres par les moyens de réglage suivant leur extension longitudinale.

4. Machine de fenaison selon au moins l'une des revendications précédentes, **caractérisée en ce que** les moyens de réglage comportent des éléments de protection qui protègent les réglages effectués au niveau des moyens de réglage contre tout déréglage accidentel.

5. Machine de fenaison selon la revendication 1, **caractérisée en ce que** chaque partie latérale (7, 8) comporte au moins une liaison par bride.

6. Machine de fenaison selon la revendication 1 ou 5, **caractérisée en ce qu'**au moins une poutre de support individuelle (13) comporte une liaison par bride, la liaison par bride permettant une rotation des éléments de poutre de support individuelle reliés par la liaison par bride sur un axe orienté suivant l'extension longitudinale des éléments de poutre de support individuelle.
